(19) Europäisches Patentamt
European Patent Office
Office européen des brevets

(11) **EP 2 285 110 A1**

(12) **EUROPEAN PATENT APPLICATION**

(43) Date of publication:
**16.02.2011 Bulletin 2011/07**

(51) Int Cl.:
*H04N 7/24* (2011.01)    *H04N 7/52* (2011.01)
*H04N 7/26* (2006.01)

(21) Application number: **09290584.3**

(22) Date of filing: **24.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Alcatel Lucent**
**75008 Paris (FR)**

(72) Inventors:
• **Changuel, Nesrine**
**75008 - Paris (FR)**

• **Sayadi, Bessem**
**75008 - Paris (FR)**
• **Kieffer, Michel**
**75008 - Paris (FR)**

(74) Representative: **Demulsant, Xavier**
**Dejade & Biset**
**35, rue de Châteaudun**
**75009 Paris (FR)**

(54) **Joint encoder and buffer regulation for statistical multiplexing of multimedia contents**

(57)    A method for statistical multiplexing of a plurality of video programs encoding units, including a step of controlling ongoing encoding units of said video programs on encoders ($E_i$), said method comprising the following steps:

- controlling occupancy of buffers ($B_i$);
- estimating encoding parameters ($Q_i$), to be assigned to encoders ($E_i$), with taking into account said buffers ($B_i$) occupancy
resulting in a joint regulation of encoders ($E_i$) and buffers ($B_i$).

FIG.1

**Description**

The present invention relates generally to optimal use of communication channel resources within quality of services constraints, and more particularly to effective use of a communication link bandwidth while statistically multiplexing a plurality of digital video contents.

BACKGROUND OF THE INVENTION

Within wireline as well as wireless communication networks, providing video services has been emerging at a very fast pace, ranging from Video on demand (VoD), digital television, video streaming, and collaborative video discussion environments. In fact, Internet, DVB-H (digital Video Broadcasting-Handheld) and mobile IPTV (Internet Protocol Television) providers compete to supply residential and/or mobile users with rich video services, high speed video delivery, and high video quality. A video service, generally, comprises a plurality of programs, where a program refers to a bit stream that digitally represents a video content, eventually in conjunction with an audio content. A program may be obtained from a live feed, a storage media or any other like source.

To that end, several programs are compressed, multiplexed then transmitted towards end users over a single communication link, characterized by a finite bandwidth or, equivalently, by a finite capacity. As examples of communication link, one can mention optical fiber distribution networks, coaxial cable distribution networks, Digital Subscriber Line (DSL), ATM (Asynchronous Transfer Mode) networks or satellite/terrestrial/wireless digital transmission facilities.

The capacity of a communication link is the maximum bitrate at which the communication link can convey digital information with a bit error rate no more than a given threshold. Hence, a straightforward behavior of video services providers is to completely occupy the available communication link bandwidth, as the least unused slice is a wasted opportunity for an improved quality of services. Therefore, it is to be decided how to distribute the available channel capacity across ongoing programs, while maintaining a satisfactory video quality for each program.

A first approach consists in dividing the channel capacity across ongoing programs in a predetermined way, scheme known under the name Constant Bit Rate (CBR) encoding. In other words, each program is allocated a fixed bitrate, irrespective of whether is concerns a complex or a simple program. The term "complex program", used herein, is intended to mean a program containing quickly changing scenes over time, such as an action film or a sports event broadcasting. Conversely, the term "simple scene" is intended to mean video containing less motion such us a TV journal or a televised debate. With such a CBR scheme, complex scenes do not get enough bandwidth, which results in artefacts appearance in transmitted program. In contrast, simple scenes, that would not require as much bandwidth, are wasting bandwidth.

Unlike CBR, a Variable Bit Rate (VBR) encoding scheme, based on the observation that it is very rare that complex scenes simultaneously occur on a plurality of parallel ongoing video stream, divides the entire available bandwidth across ongoing programs according to their instant complexities. Accordingly, the usage of VBR encoding permits a lower encoding rate for simple programs whereas more complex animations encoding takes advantages of the additional bandwidth. VBR allows the channel capacity to be dynamically allocated across programs, leading to an improved overall video quality and bandwidth savings.

A control mechanism, addressed in the art under the name of statistical multiplexing, is responsible for VBR deployment. A statistical multiplexer dynamically allocates to each program the bitrate required for its real-time needs, so that programs with complex scenes receive more bandwidth than programs with less complex ones.

Simple equal portioning, adopted by CBR, of the available bandwidth across programs is sub-optimal, in the sense that it does not take into account the diversity in video complexity which may be interpreted as a bandwidth waste. Alternatively, a quality of service improvement and a bandwidth saving are expected from statistical multiplexing.

Hence, various types of statistical multiplexers have been developed and their performances are modeled in terms of resource management and QoS controlling. Moreover, statistical multiplexing is further improved by different means such as scheduling methods and smoothing techniques.

Nevertheless, practical deployment of statistical multiplexing comes out several quality constraints that need to be jointly fulfilled so as to reach a target quality. In fact, apart from bandwidth constraint, statistical multiplexing brings additional levels of complexity, since it has to satisfy a plurality of quality constraints comprising:

- minimum distortion constraint: all programs must be simultaneously encoded with available bits, while maintaining a minimum distortion;
- fairness constraint: all programs must be encoded with more or less the same quality, and
- smoothness constraint: for each program, the quality of decoded content has to vary smoothly over time.

However, due to discrepancies between

- the statistical multiplexing approaches, which are based on generic Rate-Distortion (RD) models; and
- concrete quality constraints, which are specific to each program among ongoing ones

the total bitrate at the output of the coders may be slightly different from the available transmission rate.

Furthermore, in order to prevent bandwidth overflow or underflow, buffers are usually considered at the output of the encoders. Hence, additional control functions on buffers are to be added to statistical multiplexing tasks.

In fact, buffering for a long time, or fully occupied buffers engenders a bandwidth overflow, as well as a long delay to the system which reduce the statistical multiplexing efficiency.

Dually, a short-time buffering or buffers emptiness increases the risk of bandwidth underflow and, thus, a bandwidth waste or a leftover opportunity.

As a result, the control of buffers introduces additional constraints, namely:

- a bandwidth underflow constraint, for avoiding an inefficient use of available bandwidth;
- a bandwidth overflow constraint, for avoiding video quality violation (specially in real-time multimedia delivery such as video streaming).

Some up-to-date solutions deal only with a subset of these constraints.

The document (L. Böröczky et al., "Statistical multiplexing using MPEG-2 video encoders", 1999) introduces a channel buffer control in the MPEG2-based statistical multiplexing system. The regulated bitrate is adjusted according to only the buffer fullness. However, this method impacts the quality of each program, making the satisfaction of quality constraints difficult.

The document (Z. He et al., "Linear rate control and optimum statistical multiplexing for H.264 video broadcast," Nov. 2008) integrates a buffer regulation within statistical multiplexing. By upper bounding the transmission rate, the bandwidth overflow is addressed. However, bandwidth underflow is not considered.

The document WO/2000/040032 proposes to regulate the quantification parameters according to the state of the buffer. This scheme is usually called hypothetical reference buffer in a video encoder. No statistical multiplexing is taken into account.

Hence, an effective use of available communication link capacity with a statistical multiplexing that is simultaneously in charge of encoders and buffers control is still a challenging task.

There is still a need for an improved statistical multiplexing method and a system able to jointly control in an advanced way buffers state and encoders parameters. Otherwise, any estimation errors while focusing on only buffers state or only encoders parameters may lead to even worse results than with the deterministic method CBR.

One object of the present invention is therefore to provide such an improved method and system to ensure a joint encoders and buffers control for statistical multiplexing.

Another object of the present invention is to adjust the entire available bandwidth across incoming video programs, while avoiding a bandwidth overflow or a bandwidth underflow.

Another object of the present invention is to provide a method and system for guaranteeing the best use of the available communication link bandwidth.

Another object of the present invention is to multiplex different video contents while satisfying strict quality constraints.

Another object of the present invention is to increase utilization of a communication link capacity that is subject to random incoming video streams.

Another object of the present invention is to provide a consistent statistical multiplexing usable with any heterogeneous video programs including high-definition (HD), or standard-definition (SD) video contents.

Another object of the present invention is to provide a consistent statistical multiplexing usable with any heterogeneous video programs including complex or simple video contents.

Another object of the present invention is to provide a greater number of simultaneous ongoing programs through a communication link of a limited capacity.

Another object of the present invention is to increase the bandwidth efficiency of a communication link.

Another object of the present invention is to prevent a mismatch between the input and the output of a statistical multiplexer.

Another object of the present invention is to provide a good trade-off between fairness among programs, smoothness within each program, bandwidth underflow and bandwidth overflow.

Another object of the present invention is to achieve a constant overall video quality, using optimally the available communication link capacity.

Another object of the present invention is that the total encoding bitrate fits the transmission bitrate (bandwidth) of the communication link.

Another object of the present invention is to increase the number of video services for a given bandwidth while keeping the quality of service above a given threshold.

Another object of the present invention is to provide the best-possible trade-off between available communication link capacity and quality constraints of transmitted video programs.

Another object of the present invention is to maintain the highest level of the bandwidth occupancy over the time while satisfying quality constraints.

Another object of the present invention is to make the best use of the limited channel capacity of the communication link.

DESCRIPTION OF THE DRAWING

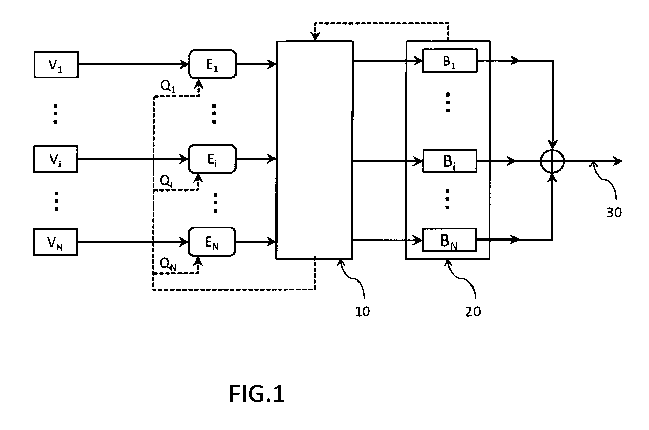

The objects, advantages and other features of the present invention will become more apparent from the following disclosure. The following non-restrictive description of a preferred embodiment of the invention is given for the purpose of exemplification only with reference to the accompanying drawing in which Fig.1 is a schematic diagram illustrating statistical multiplexing mechanism in which the present invention is implemented.

SUMMARY OF THE INVENTION

The present invention relates to a method for statistical multiplexing of a plurality of video programs encoding units, including a step of controlling ongoing encoding units of said video programs on encoders, said method comprising the following steps:

- controlling occupancy of buffers;
- estimating encoding parameters, to be assigned to encoders, with taking into account said buffers occupancy

resulting in a joint regulation of encoders and buffers.

The present invention further relates to a statistical multiplexer of a plurality of video programs encoding units, provided with encoders and buffers, said statistical multiplexer comprising:

- a rate controller operating on ongoing encoding units on encoders ;
- a buffer controller to measure buffers occupancy;

wherein said buffer controller is configured to feed back to the rate controller measured buffer occupancy to be taken into account for estimating encoding parameters to be assigned to encoders.

DETAILED DESCRIPTION OF ILLUSTRATIVE EMBODIMENTS

Various embodiments of methods described herein may be performed in a bandwidth constrained multiple programs transmission system, illustrated in Figure 1. The system includes:

- a plurality of video programs $V_1,...,V_i,...,V_N$ (N>1) to be multiplexed into a single shared communication link 30 of a finite transmission rate $R_0$ ;
- an encoding system comprising N encoders $E_1,...,E_i,...,E_N$ operating in variable bitrate mode on received uncompressed video programs $V_1,...,V_i,...,V_N$. The video content is encoded using highly efficient state-of-the-art video encoding technologies such as MPEG4, H.264 or similar;

- N outgoing buffers $B_1,...,B_i,...,B_N$ receiving inputs from the N encoders $E_1,...,E_i,...,E_N$ and used to temporally store bits for transmission over the single shared communication link 30 of finite transmission rate $R_0$;
- a rate controller 10 which is responsible for fitting the sum of allocated encoding rates to encoders $E_1,...,E_i,...,E_N$ to the communication link 30 transmission rate $R_0$, while focusing on video quality constraints satisfaction ;
- a buffer controller 20 in charge of controlling buffers $B_1,...,B_i,...,B_N$ occupancies so as to regulate the assigned bitrates.

Embodiments herein, generally, relate to transmission schemes for digital video broadcasting applications, for examples, in

- an ATM network, where a plurality of video programs $V_1,...,V_i,...,V_N$ may be multiplexed over a wide-area backbone trunk 30;
- a satellite, terrestrial, or a wireless-broadcasting scenario, where a plurality of video/audio contents $V_1,...,V_i,...,V_N$ may be multiplexed for transmission over a transponder 30;

- a cable or mobile TV scenario, where a plurality of video channels $V_1,...,V_i,...,V_N$ may be broadcasted over a coaxial cable 30 or a wireless transmission means 30 ;
- an Internet streaming scenario, where a plurality of video streams $V_1,...,V_i,...,V_N$ are broadcasted through an IP network distribution; or
- a Video on Demand platform, where a plurality of video contents $V_1,...,V_i,...,V_N$ are multiplexed for transmission over the network backbone 30.

According to the present invention, a variable bitrate encoding is used for each encoding unit j per video program $V_i$. A video program encoding unit may be a Group of Picture (GoP), a frame, or, more generally, any normalized video program unit. Hereinafter, a group of picture j per video program $V_i$ is used, designated by $GoP_{ij}$ where

- i numbering the videos programs and ranging from 1 to N; and
- j indicating the GoP number within each video program $V_i$.

It must be noted that $GoP_{ij}$ are processed in parallel across all video programs $V_1,...,V_i,...,V_N$ at instants $t_j$ by the coder controller 10.

$GoP_{ij}$ are encoded independently from each other, whatever they are related to the same video program $V_i$ or not. In fact, each GoP starts with an INTRA encoded reference picture which is encoded without reference to previous pictures.

Statistical multiplexing, at each instant $t_j$ includes the use of a plurality of parameters regarding each $GoP_{ij}$. Amongst these parameters, one can, mainly, mention the encoding parameters $Q_{ij}$ (such as quantization parameters). In fact, encoded $GoP_{ij}$ quality, as well as the bitrate $R_{ij}$, are both function of the encoding parameters $Q_{ij}$.

Varying the number of bits that are used to quantize picture elements corresponds to varying the video quality or bitrate $R_{ij}$. Thus, generally, a fine quantization is expected for encoding complex GoP, and conversely a coarse quantization is applied for encoding simple GoP.

Encoded $GoP_{ij}$ quality constraints relate to:

- distortion $D_{ij}$ within each $GoP_{ij}$;
- fairness across programs: the maximum tolerated PSNR deviation $\Delta P_i$ between $(GoP_{ij})_i$ at a given instant $t_j$;
- smoothness across successive GoPs of the same program: the maximum tolerated PSNR (Peak Signal-to-Noise Ratio) deviation $\Delta P_j$ between successive $(GoP_{ij})_j$ within each program $V_i$.

Various bitrate $R_{ij}$ and encoded $GoP_{ij}$ quality (comprising smoothness, fairness and distortion) functions of quantization parameter $Q_{ij}$ have been formulated in the art. As non limitative examples, one can mention the following RD (Rate-Distortion) exponential dependence of the bitrate $R_{ij}$ and distortion $D_{ij}$ on the encoding parameters $Q_{ij}$:

$$D_{ij} = a_D \exp(b_D Q_{ij})$$

$$R_{ij} = a_R \exp(-b_R Q_{ij})$$

It is to be noted that the above functions are given for the purposes of example only. Accordingly, hereinafter, bitrate $R_{ij}$, distortion $D_{ij}$ and peak signal-to-noise-ratio $P_{ij}$ relative to $GoP_{ij}$ are, respectively, noted $R_{ij}(Q_{ij})$, $D_{ij}(Q_{ij})$ and $P_{ij}(Q_{ij})$ to describe any other RD model.

Obviously, the achieved quality of transmitted video programs $V_1,...,V_i,...,V_N$ depends on further parameters such as the number w of $(GoP_{ij})_j$ as well its distribution over previous and subsequent GoPs in addition to the current one, used for smoothness constraint fulfillment (*N. Changuel et al, "Predictive control for efficient statistical multiplexing of digital video programs," in Proc. IEEE International Packet Video Workshop, 2009*). Suppose that w=wp+1+ws, where wp refers to the number of GoP ($GoP_{i(j-wp)}$, $GoP_{i(j-wp+1)}$, ..., $GoP_{i(j-1)}$) previous to the current one ($GoP_{ij}$) and ws is the number of GoP ($GoP_{i(j+1)}$, ..., $GoP_{i(j+ws-1)}$, $GoP_{i(j+ws)}$) subsequent to the current one ($GoP_{ij}$). It is to be noted that wp is generally chosen equal to 1. In other word, w is generally of the from w=2+ws.

Encoding parameters $(Q_{ij},..., Q_{i(j+ws)})_{i=1,..,N}$ are jointly estimated by both the rate controller 10 and the buffer controller 20 then communicated to encoder $(E_i)_{i=1,...N}$.

Then, the rate controller 10 and the buffer controller 20 are both in charge of dynamically allocating encoding parameters $Q_{ij}$ to encoder $E_i$ in order to encode the current $GOP_{ij}$ of the video program $V_i$, while satisfying quality

constraints and fitting the communication link 30 transmission rate $R_0$.

The rate controller 10 collaborates with buffer controller 20 so as to assign, to encoders $E_i$, a target encoding parameters $Q_{ij},...,Q_{i(j+ws)}$ estimated as follow:

$$\widehat{Q}_{ij}, ..., \widehat{Q}_{i(j+ws)} = \arg \min_{Q_{ij}} \sum_{i=1}^{N} D_{ij}(Q_{ij})$$

subject to

$$\left\{ \begin{array}{l} - \;\; \text{maximum distortion constraint ;} \\ - \;\; \text{fairness constraint ;} \\ - \;\; \text{smoothness constraint ;} \\ - \;\; \text{rate constraint.} \end{array} \right.$$

Maximum distortion constraint permits to maintain an acceptable transmitted video quality. Then, the distortion within each GoP is maintained under a maximum tolerated distortion $D_{max}$. In other words, all programs must satisfy the following maximum distortion constraint:

$$D_{ij}(Q_{ij}) \leq D_{max}$$

In an embodiment, $D_{max}$ is different from one program to another.

Inter-program fairness means that all transmitted programs should have similar video qualities. Unsuitable fairness among video programs may results in that the qualities of some programs are very good while those of the others are poor.

As a non-limitative example of fairness constraint, one can operate on the deviation of Peak Signal-to-Noise Ratio $P_{ij}(Q_{ij})$ of all programs $V_1,...,V_i,...,V_N$ around their mean value, as following:

$$\left| P_{ij}(Q_{ij}) - \frac{1}{N} \sum_{i=1}^{N} P_{ij}(Q_{ij}) \right| \leq \Delta P_i$$

Where $\Delta P_i$ is the maximum tolerated PSNR at instant $t_j$ and regarding $(GoP_{ij})_{i=1,...,N}$.

Obviously, various statistical parameters such as standard deviation, quadratic deviation, variance, median or geometrical mean may be used to formulate a fairness constraint. A fairness constraint is generally an inequality bounding the deviation of Peak Signal-to-Noise Ratio $P_{ij}(Q_{ij})$ of ongoing programs $V_1,...,V_i,...,V_N$ at instant $t_j$.

Intra-program smoothness constraint means that each received program should have stable visual quality, i.e. drastic PSNR variation due to inappropriate bit allocation among different $(GoP_{ij})_j$ within the same program $V_i$ must be avoided.

Each program $V_i$ should present smooth quality variations over time. In other words, PSNR deviations, across previous and subsequent $(GoP_{ij})_j$ to the current one of the same program $V_i$, must be bounded (N. Changuel et al, "Predictive control for efficient statistical multiplexing of digital video programs," in Proc. IEEE International Packet Video Workshop, 2009).

Various statistical parameters may be used to quantify PSNR variation among GoP of the same program. As a non limitative example, one can mention

- the difference between the PSNR of the current $GoP_{ij}$ and PSNR(s) of the previous $GoP_{i(j-1)}$; and
- the difference between the PSNR of the current $GoP_{ij}$ and PSNR(s) of ws subsequent $GoP_{i(j+1)}, ..., GoP_{i(j+ws)}$.

This may be formulated as follow:

$$\left|P_{ij}(Q_{ij}) - P_{i(j-p)}(Q_{i(j-p)})\right| \leq \Delta P_j$$

$$\left|P_{ij}(Q_{ij}) - P_{i(j+s)}(Q_{i(j+s)})\right| \leq \Delta P_j$$

Where $\Delta P_j$ is the maximum tolerated PSNR deviation between successive $(GoP_{ij})_j$ within the same program $V_i$. s is varying from 1 to ws and p is equal to 1.

Rate constraint aims so that the sum of assigned bitrates $(R_{ij})_i$ at instant $t_j$ to encoders $(E_i)_{i=i,..N}$ is inferior or equal to a function $R_c$ of buffers $B_1,...,B_i,...,B_N$ occupancies $b_{1j},...,b_{ij},...,b_{Nj}$ at instant $t_j$. In other words, the rate distortion constraint is of the following form:

$$\sum_{i=1}^{N} R_{ij}(Q_{ij}) \leq R_{c,j}\left(b_{1j}, b_{2j}, ..., b_{ij}, b_{Nj}\right)$$

The right hand term is a function of buffers $B_1,...,B_i,...,B_N$ occupancies $b_{1j},...,b_{ij},...,b_{Nj}$.

In one embodiment, the $R_{c,j}(b_{1j},b_{2j},...,b_{ij},b_{Nj})$ is given by the following expression:

$$R_{c,j}\left(b_{1j}, b_{2j}, ..., b_{ij}, b_{Nj}\right) = R_0 - \overline{b_j} \ ,$$

where and $R_{c,0} = R_0$ at j=0. Buffers are assumed to be at their reference occupancy.

$\overline{b_j}$ quantifies buffers occupancy/availability compared to a reference level $b_0$, while the $j^{th}$ $GoP_{ij}$ of video programs $V_1,...,V_i,...,V_N$.

$\overline{b_j}$ permits to quantify if there is bits leftover in buffers $B_1,...,B_i,...,B_N$, which could be used for opportunistic $(GoP_{ij})_j$ encoding.

It must be noted that $\overline{b_j}$ is an algebraic variable, thus

- if $\overline{b_j} > 0$, then the total buffer occupancy is higher than the reference level $b_0$. To ensure a smooth buffer occupancy and a minimum deviation, it is necessary to reduce this deviation in the encoding of the next GoP and reduce the buffer occupancy. To do that, the rate constraint is reduced and allows reducing the buffer occupancy;
- if $\overline{b_j} < 0$, then the total buffer occupancy is less than the reference level $b_0$. To ensure a smooth buffer occupancy and a minimum deviation it is necessary to reduce this deviation in the next GoP encoding and increase the buffer level. To that end, the rate constraint is increased and allows reducing the buffer occupancy.

Accordingly, $\overline{b_j}$ reports the deviation of buffers occupancy compared to the reference $b_0$ which indicates whether additional bitrates may be allocated to subsequent $(GoP_{i(j+i)})_i$ or not.

The transmission rate $c_{1j},...,c_{ij},...,c_{Nj}$ are jointly controlled by solving the following constrained optimization problem:

for i =1,...,N

$$\hat{c}_{ij} = \arg\min_{c_{ij}} \sum_{i=1}^{N} \left(b_0 - b_{ij}\right)^2$$

subject to

$$\left\{\begin{array}{l} - \;\; \text{rate constraint} \\ - \;\; \text{occupancy constraint} \end{array}\right.$$

Transmission rates $(\hat{c}_{ij})_{j=1,...,N}$ minimize the sum of the square of each buffer ($B_i$) occupancy deviation from the reference level $b_0$ under the rate constraint and occupancy constraint.

The rate constraint aims to fit the communication link 30 transmission rate $R_0$. The rate constraint may be formulated as follow: $\sum_{i=1}^{N} c_{ij} = R_0$

Occupancy constraint designates buffers occupancies bounding which may be formulated as follow: $b_{min} \leq b_{ij} \leq b_{max}$. Then, the occupancy $b_{ij}$ is controlled to limit the deviations from reference buffer occupancy $b_0$ while satisfying $b_{ij}$ in$[b_{min}, b_{max}]$, so as to prevent buffer underflow and limit the delay.

Then, buffer occupancy $b_{ij}$ is deduced from the previous buffer occupancy $b_{i(j-1)}$ and from the estimated current transmission rate $\hat{c}_{ij}$, as follow:

$$b_{ij} = b_{i(j-1)} + \left(R_{ij} - \hat{c}_{ij}\right)\Delta T$$

where $\Delta T$ is the GoP duration.

Accordingly, buffer occupancy $\bar{b}_j$ is fed back to the rate controller 10 in order to update dynamically the rate constraint of GoP$_{i(j+1)}$. Buffers $B_1,...,B_i,...,B_N$ and video encoders $E_1,...,E_i,...E_N$ are, thus, regulated in closed loop, mitigating the effect of discrepancies between the rate-distortion models and actual RD characteristics for each program $V_i$.

The optimum encoding parameters $(\hat{Q}_{ij},...\hat{Q}_{i(j+ws)})_{i=1,...,N}$ are achieved by solving the hereinbefore multi-objective convex optimization problem under, both, the available transmission rate $R_0$ and qualities constraints. Such optimization problem subjected to equalities and inequalities constraints may be solved with classical multi-objective programming or with dedicated software tools such as the optimization toolbox of Matlab®.

Assigned bitrate $(c_{i(j+1)})_i$ to encoders $E_i$ is function of $\bar{b}_j$, while matching qualities constraints which are enforced by the rate controller 10.

The rate controller 10 utilizes a feedback control mechanism that continually adjusts assigned quantization scales to be applied to incoming GOPs in function with buffers occupancies.

Better efficiency is gained by feeding back to the rate controller 10 leftover bits in buffers $B_1...,B_i,...,B_N$ occupancies $b_{1j}, ...,b_{ij},...,b_{Nj}$. Hence, buffer emptiness is translated into a gained coding rate, achieved through a fine quantization or an increase in video programs $V_i$ number. At the same time, buffers underflow and overflow scenarios are avoided and the communication link 30 transmission rate $R_0$ is fitted.

Advantageously, the full bandwidth (or equivalently, the full transmission rate $R_0$) occupancy target is set for best possible quality per program $V_i$, in such case each encoder $E_i$ is allocated as high a bitrate as possible, according to buffers $B_1,...,B_i,...,B_N$ occupancy $\bar{b}_j$.

By jointly controlling coder and buffer, statistical multiplexing mechanism may benefit from additional needed bits that are leftover in buffers and which may be appropriated toward encoders so as

- to achieve a given quality target;
- to increase the number of video programs; or
- to better use the available bandwidth by avoiding overflow and underflow.

The appearance of notations $(GoP_{ij})_j$ and $(GoP_{ij})_i$ in various places throughout the specification is intended to mean, respectively, the set of GOP$_{ij}$ by varying j and the set of GOP$_{ij}$ by varying i.

**Claims**

1. A method for statistical multiplexing of a plurality of video programs encoding units, including a step of controlling ongoing encoding units of said video programs on encoders ($E_i$), **characterized in that** comprises the following steps:

- controlling occupancy of buffers ($B_i$);
- estimating encoding parameters ($Q_i$), to be assigned to encoders ($E_i$), with taking into account said buffers ($B_i$) occupancy

resulting in a joint regulation of encoders ($E_i$) and buffers ($B_i$).

2. The method of claim 1, wherein the control of ongoing encoding units on encoders ($E_i$) focuses on video programs qualities constraint satisfaction.

3. The method of claim 2, wherein the programs qualities comprise intra-program smoothness, inter-programs fairness and maximum tolerated distortion.

4. The method of any of claims 1 to 3, wherein the control of buffers occupancy measures buffers occupancy according to a reference level.

5. The method of any of claims 1 to 4, wherein the buffers occupancy quantifies leftover bits in buffers which will be used for opportunistic units encoding.

6. The method of any of claims 1 to 5, wherein the buffers occupancy corresponds to optimal transmission rates on buffers ($B_i$).

7. The method of claim 6, wherein the optimal transmission rates minimize the sum of the square of each buffer ($B_i$) occupancy deviation from a reference level under the rate constraint and occupancy constraint.

8. The method of any of claims 1 to 7, wherein the estimated encoding parameters ($Q_i$) minimize rate-distortion models under qualities constraints and buffers occupancy.

9. The method of any of claims 1 to 8, wherein the estimated encoding parameters ($Q_i$) are obtained by solving a multi-objective optimization problem.

10. A statistical multiplexer of a plurality of video programs ($V_i$) encoding units, provided with encoders ($E_i$) and buffers ($B_i$) and **characterized in that** comprises the following modules:

   - a rate controller (10) operating on ongoing encoding units on encoders ($E_i$);
   - a buffer controller (20) to measure buffers ($B_i$) occupancy;

   wherein said buffer controller (20) is configured to feed back to the rate controller (10) measured buffer occupancy to be taken into account for estimating encoding parameters ($Q_i$) to be assigned to encoders ($E_i$).

11. The statistical multiplexer of claim 10, wherein the buffer controller (10) is configured to measure buffers ($B_i$) occupancy according to an occupancy reference level.

12. The statistical multiplexer of claim 10, wherein the rate controller (10) is configured to assign encoding parameters ($Q_i$) minimizing rate-distortion models under qualities constraints and buffers occupancy, to encoders ($E_i$).

13. The statistical multiplexer of claim 10, wherein buffers ($B_i$) and video encoders ($E_i$) are regulated in closed loop.

**Amended claims in accordance with Rule 137(2) EPC.**

1. A method for statistical multiplexing of a plurality of video programs encoding units, including a step of controlling ongoing encoding units of said video programs on encoders ($E_i$), **characterized in that** comprises the following steps:

   - controlling occupancy of buffers ($B_i$), the sum of the square of each buffer occupancy deviation from a reference level being minimized;
   - estimating encoding parameters ($Q_i$), to be assigned to encoders ($E_i$), with taking into account said buffers ($B_i$) occupancy

resulting in a joint regulation of encoders ($E_i$) and buffers ($B_i$).

**2.** The method of claim 1, wherein the control of ongoing encoding units on encoders ($E_i$) controls video programs qualities constraint satisfaction.

**3.** The method of claim 2, wherein the programs qualities comprise intra-program smoothness, inter-programs fairness and maximum tolerated distortion.

**4.** The method of any of claims 1 to 3, wherein the control of buffers occupancy measures buffers occupancy according to a reference level.

**5.** The method of any of claims 1 to 4, wherein the buffers occupancy quantifies leftover bits in buffers which will be used for further units encoding.

**6.** The method of any of claims 1 to 5, wherein the buffers occupancy corresponds to maximal transmission rates on buffers ($B_i$).

**7.** The method of claim 6, wherein the optimal transmission rates minimize the sum of the square of each buffer ($B_i$) occupancy deviation from a reference level under the rate constraint and occupancy constraint.

**8.** The method of any of claims 1 to 7, wherein the estimated encoding parameters ($Q_i$) minimize rate-distortion models under qualities constraints and buffers occupancy.

**9.** The method of any of claims 1 to 8, wherein the estimated encoding parameters ($Q_i$) are obtained by solving a multi-objective optimization problem.

**10.** A statistical multiplexer of a plurality of video programs ($V_i$) encoding units, provided with encoders ($E_i$) and buffers ($B_i$) and **characterized in that** comprises the following modules:

- a rate controller (10) operating on ongoing encoding units on encoders ($E_i$);
- a buffer controller (20) to measure buffers ($B_i$) occupancy;

wherein said buffer controller (20) is configured to feed back to the rate controller (10) measured buffer occupancy to be taken into account for estimating encoding parameters ($Q_i$) to be assigned to encoders ($E_i$).

**11.** The statistical multiplexer of claim 10, wherein the buffer controller (10) is configured to measure buffers ($B_i$) occupancy according to an occupancy reference level.

**12.** The statistical multiplexer of claim 10, wherein the rate controller (10) is configured to assign encoding parameters ($Q_i$) minimizing rate-distortion models under qualities constraints and buffers occupancy, to encoders ($E_i$).

**13.** The statistical multiplexer of claim 10, wherein buffers ($B_i$) and video encoders ($E_i$) are regulated in closed loop.

FIG.1

**EUROPEAN SEARCH REPORT**

Application Number

EP 09 29 0584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAGLIASACCHI M ET AL: "Minimum Variance Optimal Rate Allocation for Multiplexed H.264/AVC Bitstreams" IEEE TRANSACTIONS ON IMAGE PROCESSING, IEEE SERVICE CENTER, PISCATAWAY, NJ, US, vol. 15, no. 7, 1 July 2008 (2008-07-01), pages 1129-1143, XP011227465 ISSN: 1057-7149 * abstract * * section II * * section III, lines 1-27 * * sections III.A and III.B * * sections IV and VI * * tables I and II * * figures 1 and 8-11 * ----- | 1-13 | INV. H04N7/24 H04N7/58 H04N7/26 |
| X | HE Z ET AL: "Linear Rate Control and Optimum Statistical Multiplexing for H.264 Video Broadcast" IEEE TRANSACTIONS ON MULTIMEDIA, IEEE SERVICE CENTER, PISCATAWAY, NJ, US, vol. 10, no. 7, 1 November 2008 (2008-11-01), pages 1237-1249, XP011237731 ISSN: 1520-9210 * abstract * * sections II.A and II.E * * section IV.D * * figures 1 and 8-17 * ----- -/-- | 1,10 | TECHNICAL FIELDS SEARCHED (IPC) H04N |

The present search report has been drawn up for all claims

| Place of search | Date of completion of the search | Examiner |
|---|---|---|
| The Hague | 19 November 2009 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

**Europäisches Patentamt**
**European Patent Office**
**Office européen des brevets**

# EUROPEAN SEARCH REPORT

Application Number

EP 09 29 0584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANCONG LUO ET AL: "A PD Feed-back Rate Control Algorithm for Multiple Video Object Coding" CIRCUITS AND SYSTEMS, 2007. ISCAS 2007. IEEE INTERNATIONAL SYMPOSIUM O N, IEEE, PI, 1 May 2007 (2007-05-01), pages 285-288, XP031181253 ISBN: 978-1-4244-0920-4 * abstract * | 1-13 | |
| A | LILLA BÖRÖCZKYBOROCZKY ET AL: "Joint Rate Control with Look-Ahead for Multi-Program Video Coding" IEEE TRANSACTIONS ON CIRCUITS AND SYSTEMS FOR VIDEO TECHNOLOGY, IEEE SERVICE CENTER, PISCATAWAY, NJ, US, vol. 10, no. 7, 1 October 2000 (2000-10-01), XP011014108 ISSN: 1051-8215 * abstract * | 1-13 | |
| A | US 6 188 729 B1 (PERKINS MICHAEL G [US]) 13 February 2001 (2001-02-13) * abstract * * figures 2-4 * | 1-13 | TECHNICAL FIELDS SEARCHED (IPC) |
| A | SPIE, PO BOX 10 BELLINGHAM WA 98227-0010 USA, 24 October 2005 (2005-10-24), XP040212318 * abstract * * figure 2 * | 1-13 | |

The present search report has been drawn up for all claims

| Place of search | Date of completion of the search | Examiner |
|---|---|---|
| The Hague | 19 November 2009 | Arpaci, Mutlu |

EPO FORM 1503 03.82 (P04C01)

**ANNEX TO THE EUROPEAN SEARCH REPORT**
**ON EUROPEAN PATENT APPLICATION NO.**                    EP 09 29 0584

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2009

| Patent document cited in search report | Publication date | Patent family member(s) | Publication date |
|---|---|---|---|
| US 6188729        B1 | 13-02-2001 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2000040032 A

### Non-patent literature cited in the description

- **L. Böröczky et al.** *Statistical multiplexing using MPEG-2 video encoders,* 1999
- **Z. He et al.** *Linear rate control and optimum statistical multiplexing for H.264 video broadcast,* November 2008
- **Changuel et al.** Predictive control for efficient statistical multiplexing of digital video programs. *Proc. IEEE International Packet Video Workshop,* 2009
- **N. Changuel et al.** Predictive control for efficient statistical multiplexing of digital video programs. *Proc. IEEE International Packet Video Workshop,* 2009